# EUROPÄISCHE PATENTSCHRIFT

(11) **EP 4 277 816 B1**
(45) Veröffentlichungstag und Bekanntmachung des Hinweises auf die Patenterteilung: **22.10.2025**
(21) Anmeldenummer: 21835622.8
(22) Anmeldetag: 02.12.2021
(51) Int. Cl.: B60T 8/17, B60T 8/175, B60K 28/16

(54) **VERFAHREN ZUR TRAKTIONSKONTROLLE FÜR EIN KRAFTFAHRZEUG**
METHOD FOR MONITORING TRACTION FOR A MOTOR VEHICLE
PROCÉDÉ DE SURVEILLANCE DE TRACTION D'UN VÉHICULE MOTORISÉ

(30) Priorität: 18.01.2021 DE 102021100894
(43) Veröffentlichungstag der Anmeldung: 22.11.2023
(73) Patentinhaber: Bayerische Motoren Werke Aktiengesellschaft, 80809 München (DE)
(72) Erfinder: HUELSMANN, Florian, 80639 München (DE)
(86) Internationale Anmeldenummer: PCT/EP2021/084008
(87) Internationale Veröffentlichungsnummer: WO 2022/152460

(56) Entgegenhaltungen:
- EP-A1- 1 908 658
- WO-A1-03/013920
- DE-A1- 102013 213 117
- DE-A1- 19 849 666
- DE-A1- 4 205 068
- US-A- 6 002 979

## Beschreibung

Die Erfindung betrifft ein Verfahren zur Traktionskontrolle für ein Kraftfahrzeug, insbesondere ein einspuriges Kraftfahrzeug, mit einem PID-Antriebsschlupfregler zur Regelung eines Antriebsschlupfs κ wenigstens eines angetriebenen Rads.

Der Kernbestandteil einer Traktionskontrolle ist der Schlupfregler. Dieser regelt durch Anpassung des Motordrehmoments und damit Anpassung des Antriebsmoments wenigstens eines angetriebenen Rads den Antriebsschlupf des Hinterreifens. Die Eingangsgrößen des Schlupfreglers sind der Ist-Schlupf sowie der Soll-Schlupf des wenigstens einen angetriebenen Rads. Der Ist-Schlupf wird dabei aus der Fahrzeuggeschwindigkeit und der Umfangsgeschwindigkeit des wenigstens einen angetriebenen Rads berechnet. Der Soll-Hinterradschlupf wird anhand des derzeitigen Fahrzustands, wie beispielsweise der Schräglage und der Geschwindigkeit des Motorrads, ermittelt und stellt den Schlupf dar, der zur Erhaltung der Fahrzeugstabilität durch den Schlupfregler eingeregelt werden soll.

Die Differenz aus Soll- und Ist-Schlupf ergibt die Regelabweichung. Diese dient als Eingangsgröße eines PID-Reglers. Im PID-Regler wird anschließend berechnet, welches Antriebsmoment des wenigstens einen angetriebenen Rads gestellt werden muss, um die Regelabweichung zu minimieren. Ein PID-Regler (proportional-integral-derivative controller) besteht aus den Anteilen eines P-Glieds, eines I-Glieds und eines D-Glieds und kann sowohl mit einer Parallelstruktur oder einer Reihenstruktur definiert werden. Dabei weist das P-Glied ein proportionales Übertragungsverhalten auf und der P-Anteil besteht entsprechend ausschließlich aus einem proportionalen Anteil einer Verstärkung und ist daher mit seinem Ausgangssignal proportional zu dem Eingangssignal. Das I-Glied weist ein integratives Übertragungsverhalten auf und dementsprechend wirkt der I-Anteil durch zeitliche Integration der Regelabweichung auf die Stellgröße. Ferner weist das D-Glied ein differenzierendes Übertragungsverhalten auf und reagiert nicht auf die Höhe der Regelabweichung, sonder auf deren Änderungsgeschwindigkeit. Entsprechend ist der D-Anteil abhängig von der Änderungsgeschwindigkeit der Regelabweichung.

In einem PID-Regler nach dem Stand der Technik berechnet sich der D-Anteil aus dem Gradient der Regelabweichung, welcher neben der Fahrzeug- und Radbeschleunigung maßgeblich von der Fahrzeuggeschwindigkeit abhängt. Dadurch wird der D-Anteil eines PID-Reglers nach dem Stand der Technik bei gleichbleibender Schlupfbeschleunigung kleiner, je höher die Fahrzeuggeschwindigkeit ist. Dies führt letztendlich dazu, dass der D-Faktor des PID-Reglers nur auf eine Geschwindigkeit optimal eingestellt werden kann, was zu einem schlechteren Regelverhalten bei anderen Geschwindigkeiten führt. Alternativ kann der D-Faktor mittels einer Kennlinie über die Geschwindigkeit angepasst werden, um stets den optimalen Faktor für die jeweilige Geschwindigkeit einzustellen. Dies ist in der Praxis jedoch sehr aufwendig, da für eine Vielzahl von Geschwindigkeiten der optimale D-Faktor ermittelt werden muss.

Druckschriftlicher Stand der Technik im vorliegenden technischen Gebiet ist in dem Dokument WO 03/013 920 A1 offenbart, welches eine Optimierung einer Bremsdruckregelung durch einen optimierten D-Anteil zur Ansteuerung einer Druckmittelpumpe zur Bremsung von Antriebsrädern offenbart.

Es ist daher Aufgabe der vorliegenden Erfindung, ein Verfahren zur Traktionskontrolle für ein Kraftfahrzeug, insbesondere ein einspuriges Kraftfahrzeug, mit einem PID-Antriebsschlupfregler zur Regelung eines Antriebsschlupfs κ wenigstens eines angetriebenen Rads bereitzustellen, bei welchem das Regelverhalten verbessert und eine Bestimmung des entsprechenden D-Faktors optimiert ist.

Diese Aufgabe wird durch die Merkmalskombination gemäß Patentanspruch 1 gelöst.

Erfindungsgemäß wird ein Verfahren zur Traktionskontrolle für ein Kraftfahrzeug, insbesondere ein einspuriges Kraftfahrzeug, mit einem PID-Antriebsschlupfregler zur Regelung eines Antriebsschlupfs κ wenigstens eines angetriebenen Rads vorgeschlagen, bei dem eine Regelabweichung κₑᵣᵣ als Eingangsgröße des PID-Antriebsschlupfregler genutzt wird, die mittels einer Differenz eines Soll-Radschlupfs κₛₒₗₗ und eines Ist-Radschlupfs κᵢₛₜ ermittelt wird. Der PID-Antriebsschlupfregler ermittelt ein Rad-Antriebsmoment M_{AR,PID} aus einer Summer eines P-Anteils M_{AR,P}, eines I-Anteils M_{AR,I} und eines D-Anteils M_{AR,D} des PID-Antriebsschlupfreglers, welches dieser an das wenigstens eine angetriebene Rad rückführt. Dabei wird der D-Anteil M_{AR,D} des PID-Antriebsschlupfreglers mittels einer Schlupfbeschleunigung α_{κ} und die Schlupfbeschleunigung α_{κ} mittels einer Differenz aus einer Radbeschleunigung d v_{AR}/dt des wenigstens einen angetriebenen Rads und einer Fahrzeugbeschleunigung d v_{FZG}/dt ermittelt.

Auf diese Weise werden eine Verbesserung der Regelgeschwindigkeit und eine Vereinfachung der Parametrierbarkeit des PID-Reglers erzielt. Vorteilhaft daran ist, dass der D-Anteil eines PID-Reglers zur Dämpfung des Regelkreises dient. Im Falle des Schlupfreglers soll der D-Anteil M_{AR,D} einer Änderung der Regelabweichung d κₑᵣᵣ/dt entgegenwirken. Physikalisch soll durch den D-Anteil genau der Anteil des Antriebsmoments des wenigstens einen angetriebenen Rads kompensiert werden, der zu einer überschüssigen Beschleunigung des wenigstens einen angetriebenen Rads führt. Die überschüssige Beschleunigung des wenigstens einen angetriebenen Rads α_{κ} ist die Differenz aus der Fahrzeugbeschleunigung (gewollte Beschleunigung) und der Radbeschleunigung des wenigstens einen angetriebenen Rads. Das Produkt der ungewollten Radbeschleunigung α_{κ} und dem Massenträgheitsmoment des wenigstens einen angetriebenen Rads und Antriebsstrangs, welches konstant ist, ergibt genau das überschüssige Antriebsmoment des wenigstens einen angetriebenen Rads, welches durch den D-Anteil kompensiert werden soll.

In einer vorteilhaften Ausführungsvariante ist vorgesehen, dass der P-Anteil M_{AR,P}, der I-Anteil M_{AR,I} und der D-Anteil M_{AR,D} des PID-Antriebsschlupfreglers jeweils mit einem Faktor zur Parametrierung des PID-Antriebsschlupfreglers multipliziert werden. Dabei ist günstig, dass die optimale Parametrierung des D-Faktors direkt proportional zum Massenträgheitsmoment und damit konstant ist. Durch die Implementierung der Schlupfbeschleunigung als D-Anteil muss der optimale D-Faktor k_{D} nur einmal ermittelt werden und liefert unabhängig von der Fahrzeuggeschwindigkeit den optimalen D-Anteil.

In einem Ausführungsbeispiel der Erfindung ist vorgesehen, dass der I-Anteil M_{AR,I} des PID-Antriebsschlupfreglers mittels einer Integration der Regelabweichung κₑᵣᵣ ermittelt wird.

Ferner ist eine Ausführung günstig, bei welcher der Antriebsschlupfregler den Antriebsschlupf mittels Anpassung eines Motordrehmoments regelt, wodurch das Antriebsmoment M_{AR,PID} des wenigstens eines angetriebenen Rads verändert wird. Dadurch greift das Verfahren zur Traktionskontrolle bzw. der PID-Antriebsschlupfregler zur Regelung des Antriebsschlupfs κ wenigstens eines angetriebenen Rads in die Motorsteuerung ein und regelt den Schlupf.

**In** einer bevorzugten Ausführungsform der Erfindung wird der Ist-Radschlupf κᵢₛₜ mittels einer Fahrzeuggeschwindigkeit v_{FZG} und einer Umfangsgeschwindigkeit v_{AR} des wenigstens einen angetriebenen Rads ermittelt.

In einer vorteilhaften Variante ist erfindungsgemäß vorgesehen, dass der Soll-Radschlupf κₛₒₗₗ anhand eines aktuellen Fahrzeugzustands ermittelt wird. Dabei betrachtet der aktuelle Fahrzeugzustand zumindest eine Geschwindigkeit und/oder eine Schräglage des Kraftfahrzeugs. Vorteilhaft daran ist, dass zur Ermittlung des Soll-Radschlupfs die aktuellen Fahrzeugdaten herangezogen und berücksichtigt werden, wodurch die Traktionskontrolle optimiert wird.

Das erfindungsgemäße Verfahren ermittelt in einer Ausführungsvariante ein die Schlupfbeschleunigung bewirkendes überschüssiges Antriebsmoment M_{ARü} des wenigstens einen angetriebenen Rads mittels einer Multiplikation der Schlupfbeschleunigung α_{κ} und eines Massenträgheitsmoments des wenigstens einen angetriebenen Rads und Antriebsstrangs J_{AR+Antrieb}. Dabei ist günstig, dass dieses überschüssige Antriebsmoment des wenigstens einen angetriebenen Rads mittels des D-Anteils kompensiert werden soll und folglich die optimale Parametrierung des D-Faktors direkt proportional zum Massenträgheitsmoment und dementsprechend konstant ist.

Ferner ist eine Ausführung günstig, bei der Grenzwerte für die Regelabweichung κₑᵣᵣ festgelegt werden, welche einen Toleranzbereich definieren. Auf diese Weise können beispielsweise kritische Werte eines Radschlupfs, die außerhalb eines entsprechenden Toleranzbereichs liegen, bestimmt und definiert werden. Dabei definiert beispielsweise eine Regelabweichung κₑᵣᵣ von 0 einen Grenzwert, wobei eine Regelabweichung κₑᵣᵣ <= 0 einen Toleranzbereich bestimmt, bei welchem der PID-Antriebsschlupfregler nicht auf ein Antriebsmoment M_{AR,PID} des wenigstens einen angetriebenen Rads regelt, und eine Regelabweichung κₑᵣᵣ > 0 einen Toleranzbereich bestimmt, bei welchem der PID-Antriebsschlupfregler auf ein Antriebsmoment M_{AR,PID} des wenigstens einen angetriebenen Rads regelt.

In einem weiteren Ausführungsbeispiel der Erfindung ist vorgesehen, dass ein Warnsignal auf einer Anzeige des Kraftfahrzeugs ausgegeben wird, falls die Regelabweichung κₑᵣᵣ einen der Grenzwerte überschreitet. Dadurch kann einem Fahrer des Kraftfahrzeugs mitgeteilt werden, dass ein Grenzwert bzw. der Toleranzbereich des Radschlupfs überschritten wird oder wurde.

Ferner wird ein nicht-erfindungsgemäßer PID-Antriebsschlupfregler zur Regelung eines Antriebsschlupfs κ wenigstens eines angetriebenen Rads eines Kraftfahrzeugs, insbesondere eines einspurigen Kraftfahrzeugs vorgeschlagen, vorzugsweise zur Durchführung des Verfahrens entsprechend der vorhergehenden Offenbarung, umfassend
a. Sensoren zur Messung einer Fahrzeuggeschwindigkeit v_{FZG} und einer Umfangsgeschwindigkeit v_{AR} des wenigstens einen angetriebenen Rads und
b. Differenzierer zur Ermittlung der Schlupfbeschleunigung α_{κ} mittels einer Differenz aus einer Radbeschleunigung d v_{AR}/dt und einer Fahrzeugbeschleunigung d v_{FZG}/dt aus den sensorischen Daten der Fahrzeuggeschwindigkeit v_{FZG} und der Umfangsgeschwindigkeit v_{HR} des wenigstens einen angetriebenen Rads,
wobei die durch den Differenzierer ermittelte Schlupfbeschleunigung α_{κ} als D-Anteil im PID-Antriebsschlupfregler zur Regelung eines Antriebsschlupfs κ verwendet wird.

Vorteilhaft daran ist, dass mittels des entsprechenden PID-Antriebsschlupfreglers das Verfahren zur Traktionskontrolle für ein Kraftfahrzeug, insbesondere für ein einspuriges Kraftfahrzeug, zur Regelung eines Antriebsschlupfs κ wenigstens eines angetriebenen Rads anwendbar ist.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

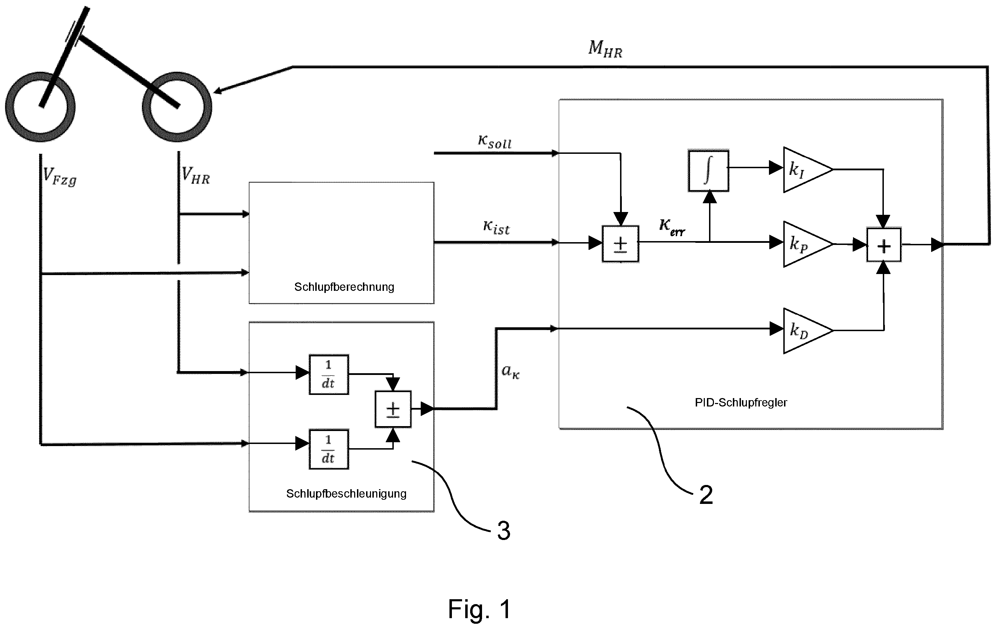

- Fig. 1: ein Blockschaltbild eines nicht erfindungsgemäßen PID-Antriebsschlupfreglers zur Regelung eines Antriebsschlupfs κ eines Hinterrads eines Kraftfahrzeugs.

Die Figuren sind beispielhaft schematisch. Gleiche Bezugszeichen in den Figuren weisen auf gleiche funktionale und/oder strukturelle Merkmale hin.

In Figur 1 ist ein Blockschaltbild eines PID-Antriebsschlupfregler 2 zur Regelung eines Antriebsschlupfs κ eines Hinterrads eines Kraftfahrzeugs dargestellt. Der PID-Antriebsschlupfregler 2 zur Regelung des Antriebsschlupfs κ des Hinterrads umfasst Sensoren zur Messung einer Fahrzeuggeschwindigkeit v_{FZG} und einer Hinterradumfangsgeschwindigkeit v_{HR} sowie einen Differenzierer 3 zur Ermittlung der Schlupfbeschleunigung α_{κ} mittels einer Differenz aus einer Radbeschleunigung d v_{HR}/dt und einer Fahrzeugbeschleunigung d v_{FZG}/dt aus den sensorischen Daten der Fahrzeuggeschwindigkeit v_{FZG} und der Hinterradumfangsgeschwindigkeit v_{HR}. Ferner wird die durch den Differenzierer 3 ermittelte Schlupfbeschleunigung α_{κ} als D-Anteil im PID-Antriebsschlupfregler 2 zur Regelung eines Antriebsschlupfs κ verwendet.

Darüber hinaus ist der PID-Antriebsschlupfregler 2 zur Durchführung des nachfolgenden Verfahrens zur Traktionskontrolle für ein Kraftfahrzeug zur Regelung eines Antriebsschlupfs κ eines Hinterrads ausgebildet.

Bei dem Verfahren wird eine Regelabweichung κₑᵣᵣ als Eingangsgröße des PID-Antriebsschlupfregler 2 genutzt, die mittels einer Differenz eines Soll-Hinterradschlupfs κₛₒₗₗ und eines Ist-Hinterradschlupfs κᵢₛₜ ermittelt wird, und der PID-Antriebsschlupfregler 2 ermittelt ein Hinterrad-Antriebsmoment M_{HR,PID} aus einer Summer eines P-Anteils M_{HR,P}, eines I-Anteils M_{HR,I} und eines D-Anteils M_{HR,D} des PID-Antriebsschlupfreglers, welches an das Hinterrad rückgeführt wird. Ferner wird der D-Anteil M_{HR,D} des PID-Antriebsschlupfreglers 2 mittels einer Schlupfbeschleunigung α_{κ} ermittelt, welche mittels einer Differenz aus einer Radbeschleunigung d v_{HR}/dt und einer Fahrzeugbeschleunigung d v_{FZG}/dt ermittelt wird.

Außerdem werden bei dem Verfahren der P-Anteil M_{HR,P}, der I-Anteil M_{HR,I} und der D-Anteil M_{HR,D} des PID-Antriebsschlupfreglers 2 jeweils mit einem Faktor zur Parametrierung des PID-Antriebsschlupfreglers 2 multipliziert. Der I-Anteil M_{HR,I} des PID-Antriebsschlupfreglers 2 wird mittels einer Integration der Regelabweichung κₑᵣᵣ ermittelt. Des Weiteren regelt der PID-Antriebsschlupfregler 2 den Antriebsschlupf mittels Anpassung eines Motordrehmoments, wodurch das Hinterrad-Antriebsmoment M_{HR,PID} verändert wird.

Darüber hinaus wird der Ist-Hinterradschlupfs κᵢₛₜ mittels einer Fahrzeuggeschwindigkeit v_{FZG} und einer Hinterradumfangsgeschwindigkeit v_{HR} ermittelt und der Soll-Hinterradschlupfs κₛₒₗₗ wird anhand eines aktuellen Fahrzeugzustands ermittelt, wobei der aktuelle Fahrzeugzustand zumindest eine Geschwindigkeit und/oder eine Schräglage des Kraftfahrzeugs betrachtet. Das Verfahren umfasst weiterhin, dass ein die Schlupfbeschleunigung bewirkendes überschüssiges Hinterrad-Antriebsmoment M_{HRü} mittels einer Multiplikation der Schlupfbeschleunigung α_{κ} und eines Massenträgheitsmoments des Hinterrads und Antriebsstrangs J_{HR+Antrieb} ermittelt wird.

Die Erfindung beschränkt sich in ihrer Ausführung nicht auf die vorstehend angegebenen bevorzugten Ausführungsbeispiele. Vielmehr ist eine Anzahl von Varianten denkbar, die unter dem Schutzumfang der nachfolgenden Ansprüche fällt.

## Patentansprüche

1. Verfahren zur Traktionskontrolle für ein Kraftfahrzeug mit einem PID-Antriebsschlupfregler (2) zur Regelung eines Antriebsschlupfs κ wenigstens eines angetriebenen Rads,
wobei eine Regelabweichung κₑᵣᵣ als Eingangsgröße des PID-Antriebsschlupfregler (2) genutzt wird, die mittels einer Differenz eines Soll-Radschlupfs κₛₒₗₗ und eines Ist-Radschlupfs κᵢₛₜ ermittelt wird,
wobei der PID-Antriebsschlupfregler (2) ein Antriebsmoment M_{AR,PID} des wenigstens einen angetriebenen Rads aus einer Summer eines P-Anteils M_{AR,P}, eines I-Anteils M_{AR,I} und eines D-Anteils M_{AR,D} des PID-Antriebsschlupfreglers (2) ermittelt und an das wenigstens eine angetriebenen Rads rückführt,
wobei der D-Anteil M_{AR,D} des PID-Antriebsschlupfreglers (2) mittels einer Schlupfbeschleunigung α_{κ} ermittelt wird,
wobei die Schlupfbeschleunigung α_{κ} mittels einer Differenz aus einer Radbeschleunigung d v_{AR}/dt des wenigstens einen angetriebenen Rads und einer Fahrzeugbeschleunigung d v_{FZG}/dt ermittelt wird.

2. Verfahren gemäß Anspruch 1, wobei der P-Anteil M_{AR,P}, der I-Anteil M_{AR,I} und der D-Anteil M_{AR,D} des PID-Antriebsschlupfreglers (2) jeweils mit einem Faktor zur Parametrierung des PID-Antriebsschlupfreglers (2) multipliziert werden.

3. Verfahren gemäß einem der Ansprüche 1 oder 2, wobei der I-Anteil M_{AR,I} des PID-Antriebsschlupfreglers (2) mittels einer Integration der Regelabweichung κₑᵣᵣ ermittelt wird.

4. Verfahren gemäß einem der Ansprüche 1 bis 3, wobei der Antriebsschlupfregler (2) den Antriebsschlupf mittels Anpassung eines Motordrehmoments regelt, wodurch das Antriebsmoment M_{AR,PID} des wenigstens einen angetriebenen Rads verändert wird.

5. Verfahren gemäß einem der vorhergehenden Ansprüche, wobei der Ist-Radschlupf κᵢₛₜ mittels einer Fahrzeuggeschwindigkeit v_{FZG} und einer Umfangsgeschwindigkeit v_{AR} des wenigstens einen angetriebenen Rads ermittelt wird.

6. Verfahren gemäß einem der vorhergehenden Ansprüche, wobei der Soll-Radschlupf κₛₒₗₗ anhand eines aktuellen Fahrzeugzustands ermittelt wird, wobei der aktuelle Fahrzeugzustand zumindest eine Geschwindigkeit und/oder eine Schräglage des Kraftfahrzeugs betrachtet.

7. Verfahren gemäß einem der vorhergehenden Ansprüche, wobei ein die Schlupfbeschleunigung bewirkendes überschüssiges Antriebsmoment M_{ARü} des wenigstens einen angetriebenen Rads mittels einer Multiplikation der Schlupfbeschleunigung α_{κ} und eines Massenträgheitsmoments des wenigstens einen angetriebenen Rads und Antriebsstrangs J_{AR+Antrieb} ermittelt wird.

8. Verfahren gemäß dem vorhergehenden Anspruch, wobei Grenzwerte für die Regelabweichung κₑᵣᵣ festgelegt werden, welche einen Toleranzbereich definieren.

9. Verfahren gemäß dem vorhergehenden Anspruch, wobei ein Warnsignal auf einer Anzeige des Kraftfahrzeugs ausgegeben wird, falls die Regelabweichung κₑᵣᵣ einen der Grenzwerte überschreitet.

## Claims

1. Method for traction control for a motor vehicle with a PID drive slip controller (2) for controlling a drive slip κ of at least one driven wheel,
wherein a control deviation κₑᵣᵣ is used as an input variable of the PID drive slip controller (2), which is determined by means of a difference between a target wheel slip κₛₒₗₗ and an actual wheel slip κᵢₛₜ,
wherein the PID drive slip controller (2) determines a drive torque M_{AR,PID} of the at least one driven wheel from a sum of a P-component M_{AR,P}, an I-component M_{AR,I} and a D-component M_{AR,D} of the PID drive slip controller (2) and feeds it back to the at least one driven wheel,
wherein the D-component M_{AR,D} of the PID drive slip controller (2) is determined by means of a slip acceleration α_{κ},
wherein the slip acceleration α_{κ} is determined by means of a difference between a wheel acceleration d v_{AR}/dt of the at least one driven wheel and a vehicle acceleration d v_{FZG}/dt.

2. Method according to claim 1, wherein the P-component M_{AR,P}, the I-component M_{AR,I} and the D-component M_{AR,D} of the PID drive slip controller (2) are each multiplied by a factor for parameterizing the PID drive slip controller (2).

3. Method according to one of claims 1 or 2, wherein the I-component M_{AR,I} of the PID drive slip controller (2) is determined by means of an integration of the control deviation κₑᵣᵣ.

4. Method according to one of claims 1 to 3, wherein the drive slip controller (2) controls the drive slip by adjusting an engine torque, thereby changing the drive torque M_{AR,PID} of the at least one driven wheel.

5. Method according to one of the preceding claims, wherein the actual wheel slip κᵢₛₜ is determined by means of a vehicle speed v_{FZG} and a circumferential speed v_{AR} of the at least one driven wheel.

6. Method according to one of the preceding claims, wherein the target wheel slip κₛₒₗₗ is determined based on a current vehicle state, wherein the current vehicle state considers at least a speed and/or a lean angle of the motor vehicle.

7. Method according to one of the preceding claims, wherein an excessive drive torque M_{ARü} of the at least one driven wheel causing the slip acceleration is determined by means of a multiplication of the slip acceleration ακ and a moment of inertia of the at least one driven wheel and drivetrain J_{AR+Antrieb}.

8. Method according to the preceding claim, wherein limit values for the control deviation κₑᵣᵣ are defined, which define a tolerance range.

9. Method according to the preceding claim, wherein a warning signal is output on a display of the motor vehicle if the control deviation κₑᵣᵣ exceeds one of the limit values.

## Revendications

1. Procédé de contrôle de traction pour un véhicule automobile avec un régulateur de glissement d'entraînement PID (2) pour réguler un glissement d'entraînement κ d'au moins une roue motrice,
où un écart de régulation κₑᵣᵣ est utilisé comme variable d'entrée du régulateur de glissement d'entraînement PID (2), qui est déterminé au moyen d'une différence entre un glissement de roue cible κₛₒₗₗ et un glissement de roue réel Kist,
où le régulateur de glissement d'entraînement PID (2) détermine un couple d'entraînement M_{AR,PID} de l'au moins une roue motrice à partir d'une somme d'une composante P M_{AR,P}, d'une composante I M_{AR,I} et d'une composante D M_{AR,D} du régulateur de glissement d'entraînement PID (2) et le renvoie à l'au moins une roue motrice,
où la composante D M_{AR,D} du régulateur de glissement d'entraînement PID (2) est déterminée au moyen d'une accélération de glissement α_{κ},
où l'accélération de glissement α_{κ} est déterminée au moyen d'une différence entre une accélération de roue d v_{AR}/dt de l'au moins une roue motrice et une accélération du véhicule d v_{FZG}/dt.

2. Procédé selon la revendication 1, dans lequel la composante P M_{AR,P}, la composante I M_{AR,I} et la composante D M_{AR,D} du régulateur de glissement d'entraînement PID (2) sont chacune multipliées par un facteur pour paramétrer le régulateur de glissement d'entraînement PID (2).

3. Procédé selon l'une des revendications 1 ou 2, dans lequel la composante I M_{AR,I} du régulateur de glissement d'entraînement PID (2) est déterminée au moyen d'une intégration de l'écart de régulation κₑᵣᵣ.

4. Procédé selon l'une des revendications 1 à 3, dans lequel le régulateur de glissement d'entraînement (2) régule le glissement d'entraînement en ajustant un couple moteur, modifiant ainsi le couple d'entraînement M_{AR,PID} de l'au moins une roue motrice.

5. Procédé selon l'une des revendications précédentes, dans lequel le glissement de roue réel κᵢₛₜ est déterminé au moyen d'une vitesse du véhicule v_{FZG} et d'une vitesse circonférentielle v_{AR} de l'au moins une roue motrice.

6. Procédé selon l'une des revendications précédentes, dans lequel le glissement de roue cible κₛₒₗₗ est déterminé sur la base d'un état actuel du véhicule, où l'état actuel du véhicule prend en compte au moins une vitesse et/ou un angle d'inclinaison du véhicule automobile.

7. Procédé selon l'une des revendications précédentes, dans lequel un couple d'entraînement excessif M_{ARü} de l'au moins une roue motrice causant l'accélération de glissement est déterminé au moyen d'une multiplication de l'accélération de glissement α_{κ} et d'un moment d'inertie de l'au moins une roue motrice et de la chaîne cinématique J_{AR+Antrieb}.

8. Procédé selon la revendication précédente, dans lequel des valeurs limites pour l'écart de régulation κₑᵣᵣ sont définies, qui définissent une plage de tolérance.

9. Procédé selon la revendication précédente, dans lequel un signal d'avertissement est émis sur un affichage du véhicule automobile si l'écart de régulation κₑᵣᵣ dépasse l'une des valeurs limites.
